# EUROPÄISCHE PATENTSCHRIFT

(11) **EP 2 450 164 B1**
(45) Veröffentlichungstag und Bekanntmachung des Hinweises auf die Patenterteilung: **05.06.2013**
(21) Anmeldenummer: 10014231.4
(22) Anmeldetag: 03.11.2010
(51) Int. Cl.: B26D 7/06, B26F 1/02, B29C 65/08, B26D 7/01, B26D 7/02, B26D 7/18, B26F 1/44, B29C 65/78

(54) **Vorrichtung zum Bearbeiten, insbesondere zum Stanzen und Verbinden, eines Werkstücks**
Device for working a workpiece, in particular for punching and connecting a workpiece
Dispositif de traitement, notamment pour estampiller et relier, une pièce d'oeuvre

(43) Veröffentlichungstag der Anmeldung: 09.05.2012
(73) Patentinhaber: Sonotronic Nagel GmbH, 76307 Karlsbad (DE)
(72) Erfinder: Nagel, Dieter, 76307 Karlsbad (DE); Nagel, Ingo, 76307 Karlsbad (DE)
(74) Vertreter: Leitner, Waldemar

(56) Entgegenhaltungen:
- EP-A1- 1 607 173
- EP-A1- 1 798 019
- EP-A1- 2 070 668
- EP-A2- 1 586 427
- DE-A1- 2 441 965
- DE-A1- 19 627 671
- DE-A1-102009 019 644

## Beschreibung

Die Erfindung betrifft eine Vorrichtung zum Bearbeiten, insbesondere zum Stanzen und Verbinden eines Werkstücks, insbesondere von Kunststoffteilen für ein Kraftfahrzeug, wobei die Vorrichtung mindestens ein Bearbeitungswerkzeug mit einem Oberwerkzeug und einem mit dem Oberwerkzeug zusammenwirkenden Unterwerkzeug aufweist wobei das oder die Oberwerkzeuge in der Vorrichtung angeordnet sind.

Eine derartige Vorrichtung ist aus der EP 1 586 427 bekannt. Das Stanzwerkzeug ist in einer Stanzstation angeordnet und das als Schweiß- oder Klebewerkzeug ausgebildete Verbindungswerkzeug ist in einer Schweiß- oder Klebestation vorgesehen. Die bekannte Vorrichtung weist einen Schiebetisch mit einer Aufnahme für das zu bearbeitende Werkstück auf, der zwischen der Stanzstation und der Schweiß- oder Klebestation hin und her fahrbar ist. Die Arbeitsweise der bekannten Vorrichtung ist nun wie folgt: Zunächst wird der Schiebetisch im Bereich der Schweiß- oder Klebestation angeordnet, um das Werkstück in dessen Aufnahme einzulegen. Nach der Befestigung des Werkstücks in der Aufnahme wird diese mittels einer Halterung soweit angehoben, bis die in der Aufnahme vorgesehenen Schweißwerkzeuge freistehen. Das Werkstück wird mittels des Schiebetisches zur Stanzstation gefahren. In dieser ist die Matrize in einer entsprechend niedrigen Position angeordnet, so dass sie bei angehobener Annahme von den Seitenwänden des Werkstücks kollisionsfrei überfahren werden kann, bis sie in der Mitte eines U-förmigen Raums des Werkstücks angeordnet ist. Anschließend wird dieses durch Absenken der Halterung so tief herabgesenkt, bis es mit seiner Unterseite auf der Matrize aufliegt. Im weiteren Verlauf wird mit einem oder mehreren Stanzstempeln durch Betätigung eines entsprechenden Stanzzylinders eine Stanzung durchgeführt, um das Werkstück mit wenigstens einem Loch zu versehen. Nach Beendigung des Stanzprozesses wird die Aufnahme angehoben, bis die Matrize freisteht. Dann wird der Schiebetisch samt dem Werkstück in die Schweißstation gefahren und schließlich die Aufnahme wieder abgesenkt, bis ihre Unterseite den Schweißwerkzeugen dicht gegenübersteht. Anschließend erfolgt ein Schweißvorgang, indem eine Sonotrode mit ihrem Arbeitshub von unten gegen das Werkstück gedrückt wird. Nach Beendigung des Schweißvorgangs wird das fertige Werkstück bei noch abgesenkter Aufnahme entnommen und ein neues Werkstück auf die Aufnahme aufgelegt und die beschriebenen Arbeitsschritte werden bei dem neuen Werkstück wiederholt.

Eine derartige Vorrichtung besitzt den Nachteil, dass sie sehr tief baut. Die Stanzstation und Schweißstation sind voneinander räumlich separiert angeordnet und durch den zwischen diesen beiden Stationen pendelnden Schiebetisch verbunden. Die bekannte Vorrichtung zeichnet sich daher durch einen sehr großen Platzbedarf aus. Außerdem baut die bekannte Vorrichtung - auch baugrößenbedingt - teuer, da - um die entsprechenden Fertigungstoleranzen einzuhalten - der Schiebetisch samt der Halterung und der Aufnahme eine hohe Präzision besitzen müssen, damit keine Positionsabweichungen des Werkstücks in den beiden vorgenannten Stationen auftreten.

Aus der DE 24 41 965 A1 ist eine Anordnung zum Bedienen insbesondere einer einseitig offenen Presse bekannt, die einen nach dem Revolver-Prinzip arbeitenden Werkzeughalter und einen Roboter aufweist. Diese beiden Geräte bedienen zusammen automatisch eine einseitig offene Presse, indem sie in die Öffnung bzw. den Spalt der Presse nacheinander die notwendigen Werkzeuge und die Werkstücke zuführen. Der Revolver weist vier Arme auf, die kreuzweise angeordnet sind. Jeder der Arme trägt an seinem freien Ende einen Werkzeugsatz, der im Allgemeinen aus einem oberen und einem unteren Werkzeug besteht. Wenn die einzelnen Werkzeugsätze durch die Presse bewegt werden, führen sie einen Bearbeitungsvorgang auf das Werkstück aus. Die Aufgabe, die der Roboter auszuführen hat, besteht darin, die Werkstücke in den Armen des Revolvers des Werkzeughalters dann auszuwechseln, wenn sich ein Revolverarm am Roboter vorbeibewegt. Der Revolver führt eine schrittweise Drehung um eine vertikale Achse aus und besitzt zwei Arme, die um eine zusätzliche vertikale Achse hin- und herbeweglich sind. Der Roboter versorgt den Revolver mit Rohlingen, indem er die Rohlinge von einem Rohling-Speicher aufnimmt und jeden aufgenommenen Rohling zum Revolver bewegt, in welchem dieser von dem Werkzeugsatz aufgenommen wird, der den ersten Verfahrensschritt ausführen soll.

Aus der DE 196 27 671 ist eine Glaspresseinrichtung mit einer Schwenkform zur Erreichung einer Speise-, Press- und Entnahmestation bekannt. Die Schwenkform ist auf einem Schwenk- oder Kipptisch aufgebaut, der um eine Schwenkachse rechtwinklig zu einer Pressstempelachse und gleichzeitig rechtwinklig, parallel oder in einem der Produktionsrichtung entsprechenden Winkel zur horizontalen Speiseachse schwenkbar ist, so dass die Schwenkform in einem Schwenkwinkel abweichend von der vertikalen Stempelachse in Richtung des Tropfpunktes des Speisers in eine Speiseposition geschwenkt werden kann, und von dort in einer senkrechten Position in Übereinstimmung mit der Stempelachse in die Pressposition und von dort aus um einen zweiten Schwenkwinkel entgegen der Richtung des Speisers in die Entnahmeposition und von dort aus direkt zurück zur Speiseposition bewegbar ist.

Die EP 1 607 173 beschreibt eine Werkstückaufnahme für eine Werkzeugmaschine, die einen um eine horizontale Achse schwenkbaren, rechteckigen Tisch aufweist. Dieser Tisch ist von einer im wesentlichen horizontalen Position, in der das Werkstück auf der Tischfläche angeordnet und dort geklemmt ist, in eine vertikale Position, in welcher die Tischfläche zu einer Bearbeitungsstation ausgerichtet ist, schwenkbar ist.

Die EP 1 798 019 A zeigt eine Vorrichtung zum Bearbeiten von Kunststoffteile für ein Kraftfahrzeug gemäß dem Oberbegriff von Anspruch 1.

Es ist Aufgabe der vorliegenden Erfindung, eine Vorrichtung der eingangs genannten Art derart weiterzubilden, dass die erfindungsgemäße Vorrichtung kompakter baut, sowie mit einem Bearbeitungswerkzeug auszustatten, das sich insbesondere für einen Einsatz in der erfindungsgemäßen Vorrichtung eignet.

Zur Lösung dieser Aufgabe schlägt die erfindungsgemäße Vorrichtung vor, dass das oder diese Unterwerkzeuge auf einem Schwenktisch der Vorrichtung angeordnet sind, der von einer Beladestellung, in welcher der Schwenktisch vor dem oder den Oberwerkzeugen entfernt ist, in eine Arbeitsstellung in der das oder die Unterwerkzeuge mit dem oder den zusammenwirkenden Oberwerkzeugen ausgerichtet sind, schwenkbar ist, so dass durch eine Schwenkbewegung des Schwenktisches das in der Beladestellung des Schwenktisches in die Vorrichtung eingebrachte Werkstück sowie das oder die Unterwerkzeuge unter das oder die Oberwerkzeuge bringbar ist.

Durch die efindungsgemäßen Maßnahmen wird eine Vorrichtung geschaffen, die sich durch ihre besonders kompakte und daher in Fertigungshallen wenig Raum einnehmende Bauweise auszeichnet. Indem nun erfindungsgemäß vorgesehen ist, dass das auf dem Schwenktisch aufgelegte Werkstück durch eine Verschwenkbewegung unter die Oberwerkzeuge des oder der Bearbeitungswerkzeuge der erfindungsgemäßen Vorrichtung gebracht wird, wird in vorteilhafter Art und Weise ermöglicht, auf den bisher bei den bekannten Vorrichtungen eingesetzten Schiebetisch zu verzichten. In der Arbeitsposition des Schwenktisches erfolgt dann die Bearbeitung des Werkstücks, und zwar insbesondere sowohl ein Stanzen als auch ein Verbinden, hierbei insbesondere ein Schweißen. Dies wird dadurch ermöglicht, dass die Unterwerkzeuge im Schwenktisch angeordnet sind und somit dessen Bewegung folgen.

Eine vorteilhafte Weiterbildung der Erfindung sieht vor, dass die Vorrichtung eine Entnahmeeinrichtung aufweist, durch welche das auf dem Schwenktisch angeordnete Werkstück in der Arbeitsstellung der Vorrichtung erfassbar und von dem oder den Unterwerkzeugen wegbewegbar ist. Eine derartige Maßnahme besitzt den Vorteil, dass hierdurch in einfacher Art und Weise eine Entnahme des fertig bearbeiteten Werkstücks aus der Vorrichtung möglich ist, während gleichzeitig zum Entnahmevorgang der Schwenktisch in seine Aufnahmeposition zurückbewegbar und dort neu bestückbar ist.

Eine weitere vorteilhafte Weiterbildung der Erfindung sieht vor, dass das oder mindestens eines der Bearbeitungswerkzeuge ein Unterwerkzeug mit mindestens zwei Bearbeitungseinheiten aufweist, die zum Oberwerkzeug hin- und von diesem wegbewegbar sind, und dass das Unterwerkzeug eine Bewegungseinheit aufweist, durch welche mindestens die erste Bearbeitungseinheit und die zweite Bearbeitungseinheit wahlweise unter dem Oberwerkzeug des Bearbeitungswerkzeugs positionierbar sind. Vorzugsweise ist vorgesehen, dass mindestens eine der Bearbeitungseinheiten eine Matrize aufweist, welche mit dem Stanzstempel des Oberwerkzeugs zusammenwirkt, und dass mindestens eine Bearbeitungseinheit des Unterwerkzeugs als eine Verbindungseinheit ausgeführt ist. Die erfindungsgemäßen Maßnahmen besitzen den Vorteil, dass unter dem Oberwerkzeug des Bearbeitungswerkzeugs unterschiedliche Bearbeitungseinheiten positioniert werden können. Das erfindungsgemäße Bearbeitungswerkzeug bildet somit vorzugsweise ein kombiniertes Stanz- und Verbindungswerkzeug aus und erlaubt es, dass in der Arbeitsposition des Vorrichtung hintereinander ein Stanz- und ein Verbindungsvorgang durchgeführt werden kann, ohne dass das Werkstück in seiner Lage verändert werden muß.

Weitere vorteilhafte Weiterbildungen der Erfindung sind Gegenstand der Unteransprüche.

Weitere Vorteile und Einzelheiten der Erfindung sind den Ausführungsbeispielen zu entnehmen, die im folgenden anhand der Figuren beschrieben werden. Es zeigen:
Figur 1: eine schematische Darstellung eines ersten Ausführungsbeispiels der Vorrichtung in einer Beladestellung,
Figur 2: eine Vorderansicht des ersten Ausführungsbeispiels,
Figur 3: eine Seitenansicht des ersten Ausführungsbeispiels,
Figur 4: eine perspektivische Darstellung des ersten Ausführungsbeispiels der Vorrichtung in einer Arbeitsstellung,
Figur 5: eine Vorderansicht des ersten Ausführungsbeispiels in seiner Arbeitsstellung,
Figur 6: eine Seitenansicht des ersten Ausführungsbeispiels in seiner Arbeitsstellung,
Figur 7: eine Vorderansicht eines Ausführungsbeispiels eines Bearbeitungswerkzeugs in einer ersten Bearbeitungsposition,
Figur 8: eine Vorderansicht des Bearbeitungswerkzeugs der Figur 7 in einer zweiten Bearbeitungsposition,
Figur 9: eine perspektivische Darstellung eines zweiten Ausführungsbeispiels der Vorrichtung in seiner Arbeitsstellung,
Figur 10: eine Vorderansicht des zweiten Ausführungsbeispiels,
Figur 11: eine Seitenansicht des zweiten Ausführungsbeispiels,
Figur 12: eine perspektivische Darstellung des zweiten Ausführungsbeispiels der Vorrichtung in seiner Beladestellung,
Figur 13: eine Vorderansicht des zweiten Ausführungsbeispiels,
Figur 14: eine Seitenansicht des zweiten Ausführungsbeispiels,
Figur 15: eine vergrößerte Darstellung des Untertisches.

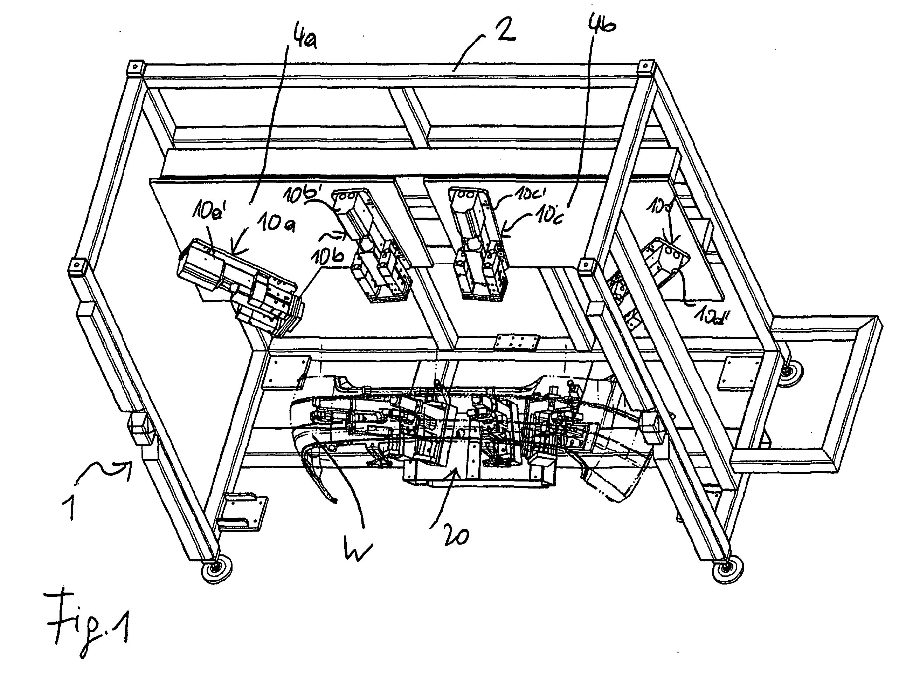

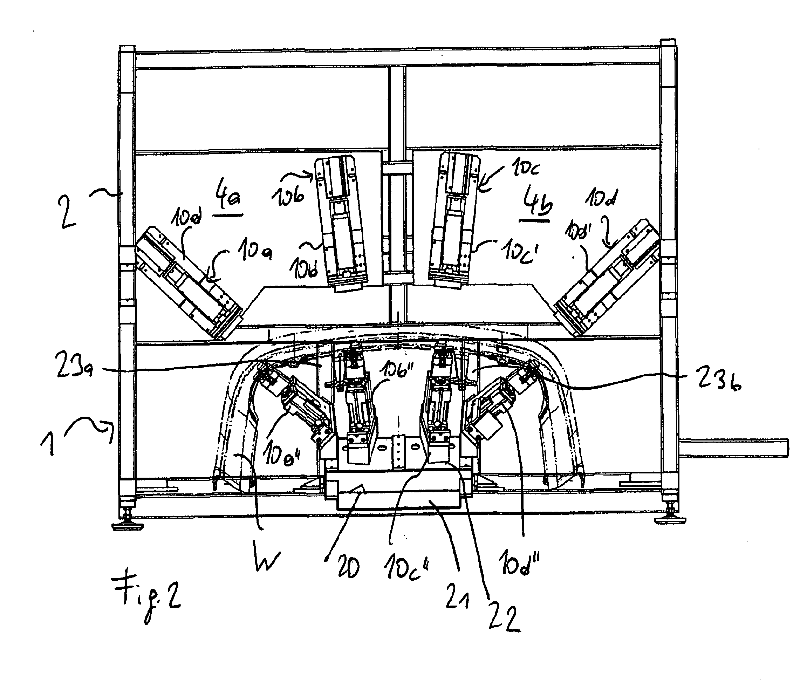

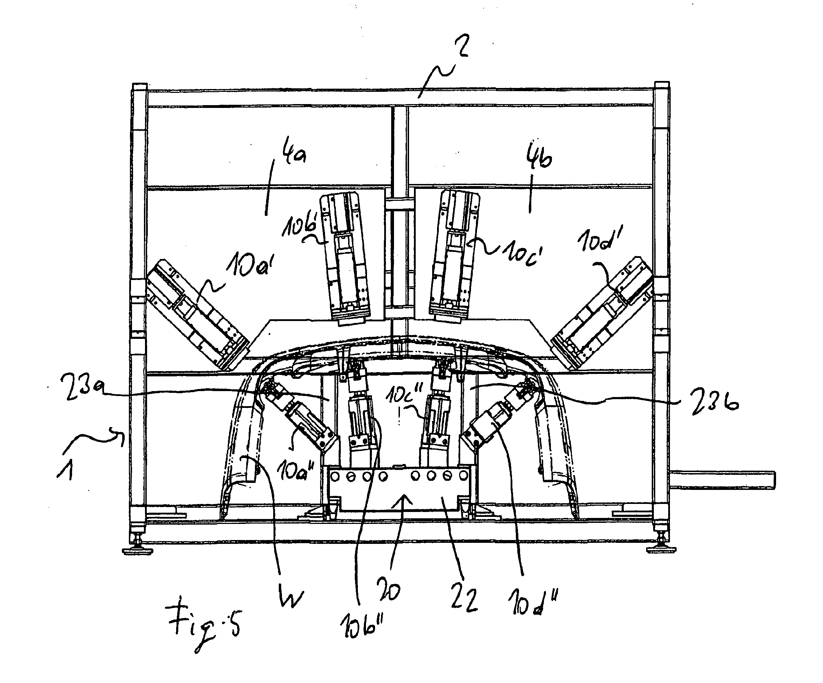

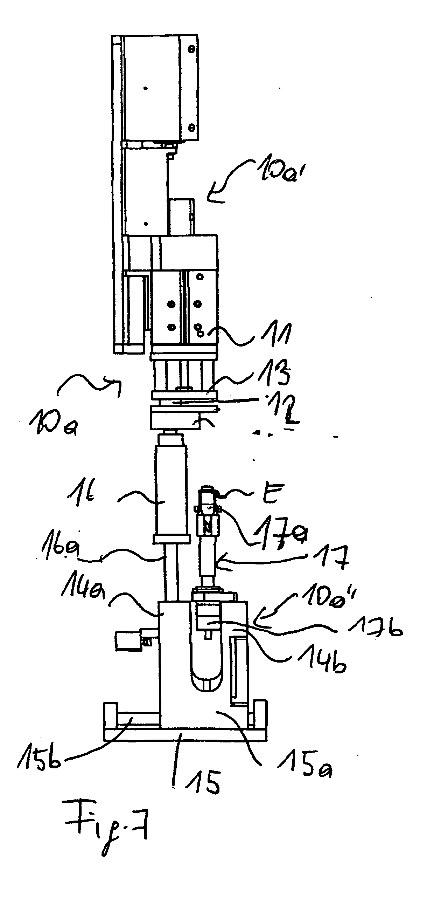

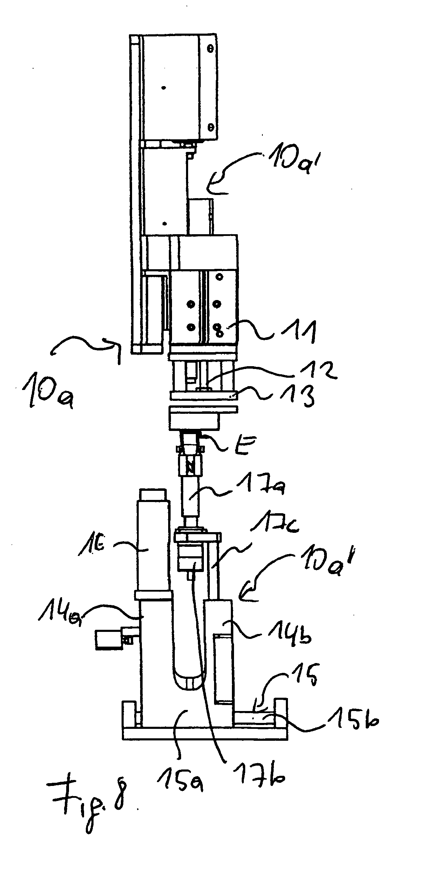

In den Figuren 1 bis 6 ist nun ein allgemein mit 1 bezeichnetes Ausführungsbeispiel einer Vorrichtung zum Stanzen und Verbinden eines in den Figuren nur schematisch dargestellten Werkstücks W dargestellt, die einen Rahmen 2 aufweist, in dem - im hier gezeigten Ausführungsbeispiel - vier Bearbeitungswerkzeuge 10a-10d angeordnet sind. Jedes Bearbeitungswerkzeug 10a-10d ist zweiteilig ausgebildet und besitzt jeweils ein Oberwerkzeug 10a'-10d' und ein Unterwerkzeug 10a"-10d". Die Ausbildung der Bearbeitungswerkzeuge 10a-10d wird nachstehend anhand der Figuren 7 und 8 noch erläutert werden.

Die Vorrichtung 1 besitzt einen Schwenktisch 20, dessen Untertisch 21 stationär am Rahmen 2 der Vorrichtung 1 montiert ist. Ein Obertisch 22 des Schwenktisches 20 ist über eine nicht näher dargestellte Gelenkverbindung 23 am Untertisch 21 angelenkt, so dass der Obertisch 22 um eine Gelenkachse gegenüber dem Untertisch 21 schwenkbar ist. Am Obertisch 22 sind zwei Aufnahmen 23a, 23b angeordnet, welche das Werkstück W tragen. Im hier gezeigten Fall ist das Werkstück W ein Kotflügel eines Kraftfahrzeugs, in den wie nachstehend beschrieben vier Stanzlöcher eingebracht und eine Verbindung des Kotflügels mit einem Einlegeteil durchgeführt werden soll. Dem Fachmann ist aber klar ersichtlich, dass die Vorrichtung 1 nicht nur für einen Kotflügel eingesetzt werden kann. Insbesondere ist es möglich, Bauteile zur Karosserie-Außenverkleidung zu bearbeiten, insbesondere Stoßfänger, Front- und Heckblenden oder dergleichen. Auch ist die Vorrichtung 1 nicht für eine Verwendung im automotiven Bereich beschränkt, sondern in einer Vielzahl von anderen Bereichen einsetzbar.

Auf dem Obertisch 22 des Schwenktisches 20 sind die Unterwerkzeuge 10a"-10d" der Bearbeitungswerkzeuge 10a-10d angeordnet, so dass bei einer Schwenkbewegung des Obertisches 22 auch die auf ihm befestigten Unterwerkzeuge 10a"-10d" der Bearbeitungswerkzeuge 10a-10d mitgeschwenkt werden.

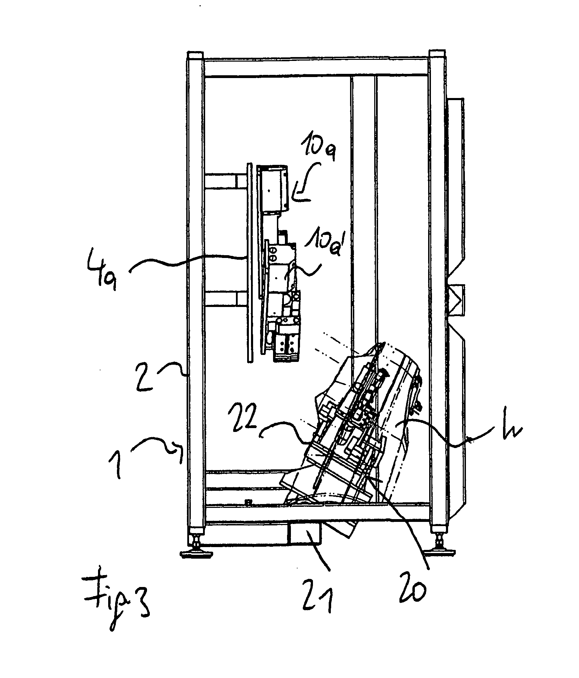

Am Rahmen 2 der Vorrichtung 1 sind - wie am besten aus den Figuren 1 und 3 ersichtlich ist - zwei Trägerplatten 4a, 4b befestigt, auf der die Oberwerkzeuge 10a'-10d' der Bearbeitungswerkzeuge 10a-10d angebracht sind. Es ist selbstverständlich, dass hier das Oberwerkzeug 10a'-10d' eines jeden Bearbeitungswerkzeugs 10a-10d derart auf das zugehörige Unterwerkzeug 10a"-10d" ausgerichtet ist, dass bei einem Bearbeitungsvorgang die Oberwerkzeuge 10a'-10d' mit den Unterwerkzeugen 10a"-10d" zusammenwirken.

Zum besseren Verständnis der Arbeitsweise der Vorrichtung 1 soll deren Erläuterung eine Beschreibung der Bearbeitungswerkzeuge 10a-10d vorangestellt werden: Die Figuren 7 und 8 zeigen nun das Bearbeitungswerkzeug 10a, die weiteren Bearbeitungswerkzeuge 10b-10d der Vorrichtung sind vorzugsweise gleich ausgebildet. Man erkennt wiederum in den Figuren 7 und 8 das Oberwerkzeug 10a' und das Unterwerkzeug 10a". Das Oberwerkzeug 10a' ist als Stanzwerkzeug ausgebildet und weist einen Stanzkopf 11 auf, der einen Stanzstempel 12 beaufschlagt, so dass dieser zum Unterwerkzeug 10a" relativ bewegbar ist. Der Stanzstempel 12 ist von einem Abstreifer oder Niederhalter 13 umgeben, so dass das Werkstück W beim Stanzvorgang hinreichend lagefixiert ist. Ein derartiger Stanzkopf 11 ist an und für sich bekannt und muss daher nicht mehr näher beschrieben werden.

Wesentlich ist nun die Ausbildung des Unterwerkzeugs 10a". Dieses weist zwei Bearbeitungseinheiten 14a und 14b auf, die relativ zum Oberwerkzeug 10a' verschiebbar sind, so dass wahlweise die erste Bearbeitungseinheit 14a oder die zweite Bearbeitungseinheit 14b unter dem Oberwerkzeug 10a' positionierbar ist, um mit diesem Oberwerkzeug 10a' zusammenzuwirken. Im hier gezeigten Ausführungsbeispiel wird dies dadurch erreicht, dass die beiden Bearbeitungseinheiten 14a, 14b mittels eines Schlittens 15 bewegbar sind: Die Bearbeitungseinheiten 14a, 14b sind auf einem Schlittentisch 15a des Schlittens 15 angeordnet, der auf einer Schlittenführung 15b verschiebbar gelagert ist. Durch eine Verschiebung des Schlittentisches 15a entlang der Schlittenführung 15b kann somit - wie in Figur 7 gezeigt - die erste Bearbeitungseinheit 14a unter dem Oberwerkzeug 10a' positioniert werden. Durch eine entsprechende Verschiebebewegung des Schlittentisches 15a in der Figur 7 nach links wird dann die zweite Bearbeitungseinheit 14b unter dem Oberwerkzeug 10a' des Bearbeitungswerkzeugs 10a positioniert. Es ist dem Fachmann aber klar ersichtlich, dass die vorstehend beschriebene Konstruktion - beide Bearbeitungseinheiten 14a und 14b sind auf einem gemeinsamen Schlitten 15 positioniert - zwar bevorzugt aber nicht zwingend ist. Es ist auch möglich, dass die beiden Bearbeitungseinheiten 14a, 14b - etwa durch jeweils einen Schlitten - separat voneinander bewegbar sind. Auch ist es nicht zwingend, dass - wie im beschriebenen Ausführungsbeispiel - nur zwei Bearbeitungseinheiten 14a, 14b vorgesehen sind. Es ist genauso möglich, dass das Unterwerkzeug 10a" drei oder mehr zum Oberwerkzeug 10a' relativbewegliche Bearbeitungseinheiten 14a, 14b aufweist.

Im hier beschriebenen Fall dient die erste Bearbeitungseinheit 14a des Unterwerkzeugs 10a" zum Ausstanzen einer Öffnung im Werkstück W. Demzufolge weist die erste Bearbeitungseinheit 14a eine Matrize 16 auf, welche mit dem Stanzstempel 12 des Oberwerkzeugs 10a' zusammenwirkt. Die Matrize 16 ist von einer Hubeinheit 16a in Richtung des Oberwerkzeugs 10a' und somit zum Stanzstempel 12 hin- und von diesem wegbewegbar.

Die zweite Bearbeitungseinheit 14b dient zum Verbinden eines Einlegteils E (siehe dazu Figur 7) mit dem Werkstück W. Dies geschieht im hier beschriebenen Fall durch eine Ultraschallverschweißung. Demzufolge weist die zweite Bearbeitungseinheit 14b eine Ultraschalleinheit 17 mit einer Sonotrode 17a und einem Schwingungsgenerator 17b auf. Eine Hubvorrichtung 17c (siehe Figur 8) dient zum Verfahren der Sonotrode 17a zum Oberwerkzeug 10a' hin, wie dies in Figur 8 dargestellt ist. Natürlich ist es auch möglich, anstelle des Ultraschall-Schweißens zum Verbinden des Einlegeteils E dies zu kleben, zu fügen oder in einer anderen Art und Weise zu verbinden. Dem Fachmann sind die Modifikationen, die er dann vornehmen muss, ersichtlich, so dass sie hier nicht weiter beschrieben werden.

Die Funktionsweise der Vorrichtung 1 gemäß dem ersten Ausführungsbeispiel ist wie folgt: Wie am besten aus der Figur 3 ersichtlich, wird zum Einlegen des Werkstücks W in die Vorrichtung 1 der Obertisch 22 des Schwenktisches 20 nach vorne geklappt. Vor dem Auflegen des Werkstücks W auf die Aufnahmen 23a, 23b des Schwenktisches 20 werden jedoch - wie in Figur 8 dargestellt - die mit dem Werkstück W zu verbindenden, hier zu verschweißenden Einlegteile E auf die zweiten Bearbeitungseinheiten 14b der Unterwerkzeuge 10a"-10d" gelegt. Im hier beschriebenen Fall werden also die Einlegteile E auf die Sonotroden 17 aufgelegt, die also als Fügekopf fungieren.

Danach wird das Werkstück W durch eine einfach durchzuführende Schwenkbewegung des Schwenktisches 20 unter die Oberwerkzeuge 10a'-10d' der Bearbeitungswerkzeuge 10a-10d geschwenkt. In der Regel erfolgt die Positionierung des Werkstücks W unter den Oberwerkzeugen 10a'-10d' durch diese Schwenkbewegung. Es ist aber nicht ausgeschlossen, dass der Schwenktisch hierzu eine kurze Strecke in Richtung der Oberwerkzeuge 10a'-10d' verfahren wird.

Die vorstehend erläuterte Konstruktion besitzt den Vorteil, dass durch die Verwendung des Schwenktisches 20 zum Positionieren des Werkstücks 20 unter den Oberwerkzeugen 10a'-10d' und die Anordnung der Unterwerkzeuge 10a"-10d" auf dem Schwenktisch 20 die beschriebene Vorrichtung 1 weniger tief und somit kompakter baut und damit einen geringeren Platz in der Fertigungshalle einnimmt. Außerdem ist eine kurze Schwenkbewegung deutlich einfacher zu realisieren als eine lange Verfahrbewegung, wie dies bei den bekannten, einen zwischen der Schweißstation und der Verbindungsstation pendelnden Schiebetisch verwendenden Vorrichtungen der Fall ist.

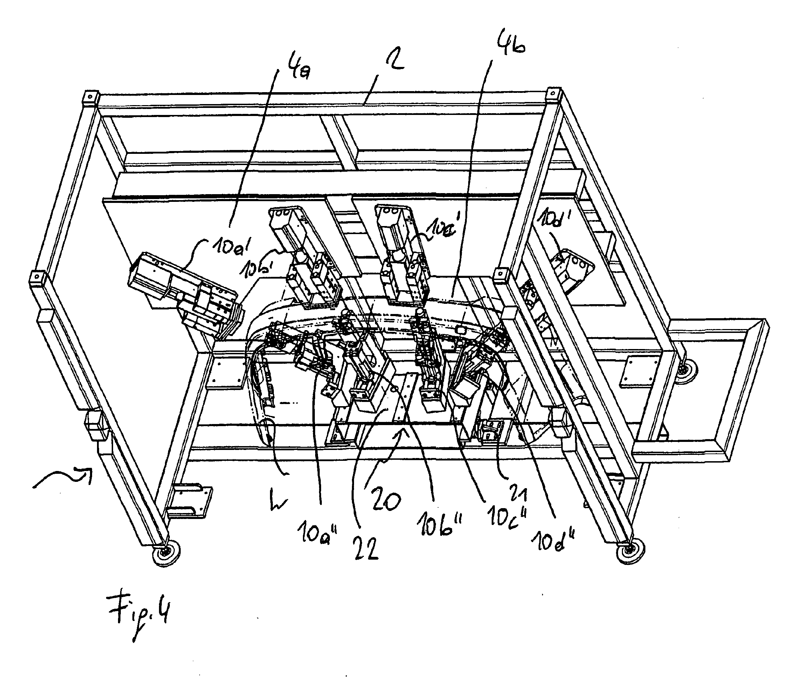

Nach der Durchführung dieser Positionierbewegung des Werkstücks W durch den Schwenktisch 20 befindet sich dieser und somit das Werkstück W in der in den Figuren 4 bis 6 dargestellten Position unterhalb der Oberwerkzeuge 10a'-10d'. Zum Ausstanzen der in das Werkstück W einzubringenden Öffnungen werden dann - wie in Figur 7 dargestellt - die ersten Bearbeitungseinheiten 14a der Unterwerkzeuge 10a"-10d" der hier als kombinierte Stanz- und Verbindungswerkzeuge ausgebildeten Bearbeitungswerkzeuge 10a-10d positioniert, so dass die Matrizen 16 der ersten Bearbeitungseinheiten 14a unter den Stanzstempeln 12 der Oberwerkzeuge 10a'-10d' angeordnet sind. Durch eine Hubbewegung der Hubeinheiten 16a werden dann die Matrizen 16 in Anlage mit der Innenseite des Werkstücks W gebracht und fungieren derart als Gegenhalter für die Stanzstempel 12. Durch an und für sich bekannte und daher nicht mehr im Detail beschriebene Stanzbewegungen der Stanzstempel 12 werden dann die Stanzöffnungen im Werkstück W ausgebildet.

Nach dem Herstellen dieser Öffnungen werden die Stanzstempel 12 vom Werkstück W leicht wegbewegt. Genauso werden die in Anlage mit dem Werkstück W befindlichen Matrizen 16 durch eine Rückwärtsbewegung der Hubeinheiten 16a vom Werkstück W wegbewegt.

Durch eine Bewegung des Schlittens 15 werden dann die zweiten Bearbeitungseinheiten 14b unter den Oberwerkzeugen 10a'-10d' positioniert, wie dies in Figur 8 dargestellt ist. Durch eine Zustellbewegung der Hubvorrichtungen 17c werden die Sonotroden 17a samt den auf ihnen gelagerten Einlegeteile E zum Werkstück W hinbewegt, gegen dieses gepresst und die Einlegeteile E werden mit dem Werkstück W durch eine Ultraschallbeaufschlagung derselben mit diesem verbunden. Der Bearbeitungsvorgang ist somit abgeschlossen.

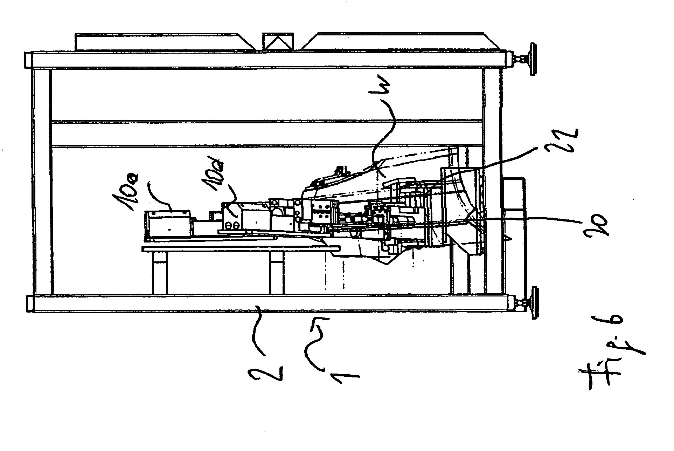

Zur Entnahme des Werkstücks W wird dann wiederum der Schwenktisch 20 zusammen mit dem Werkstück W von seiner in Figur 6 gezeigten Arbeitsstellung in seine in Figur 3 gezeigte Beladestellung zurückgeschwenkt und das Werkstück W kann leicht aus der Vorrichtung 1 entnommen werden.

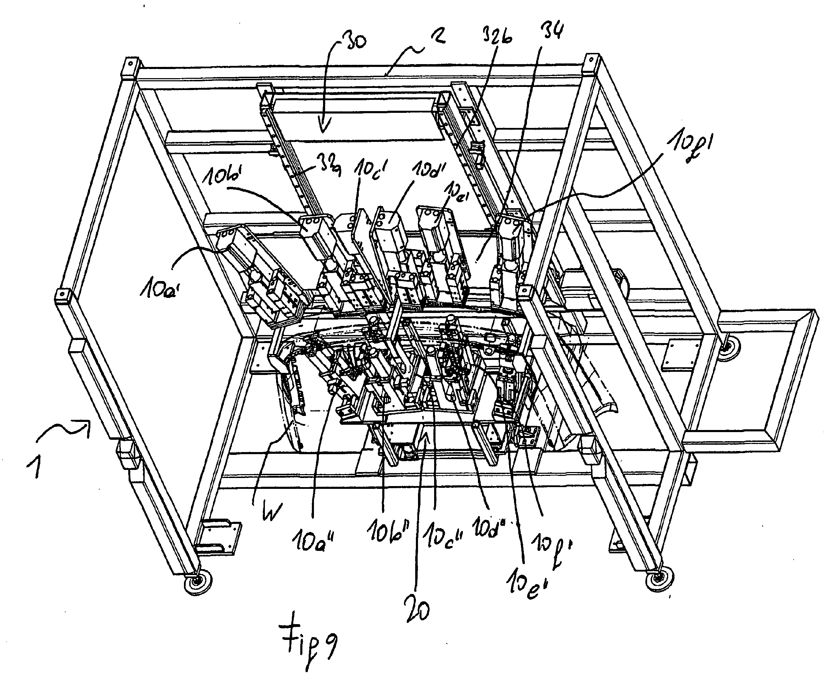

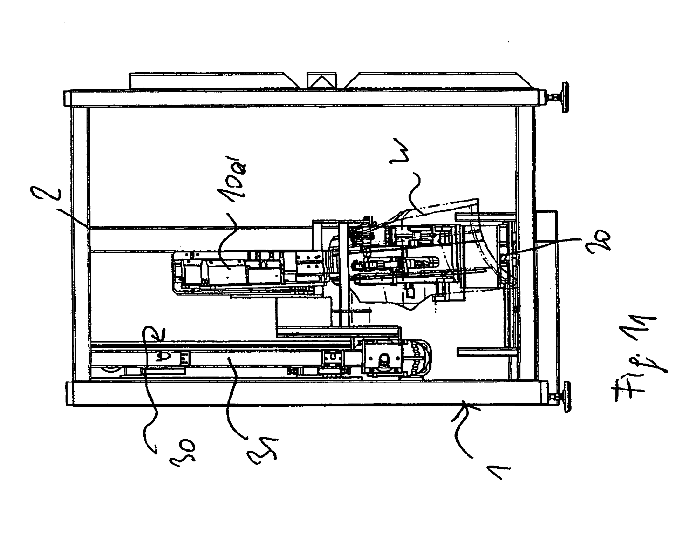

In den Figuren 9 bis 14 ist ein zweites Ausführungsbeispiel der Vorrichtung 1 dargestellt, wobei einander entsprechende Bauteile mit den gleichen Bezugszeichen versehen und nicht mehr beschrieben werden. Der wesentliche Unterschied zwischen dem ersten und dem zweiten Ausführungsbeispiel besteht nun weniger darin, dass die Vorrichtung 1 des zweiten Ausführungsbeispiels sechs Bearbeitungswerkzeuge 10a-10f mit Oberwerkzeugen 10a'-10f und Unterwerkzeugen 10a'-10f' besitzt, sondern dass sie eine Entnahmeeinrichtung 30 aufweist, durch welche das auf dem Schwenktisch 20 gelagerte Werkstück W in der Arbeitsstellung der Vorrichtung 1 aus dieser entnommen werden kann.

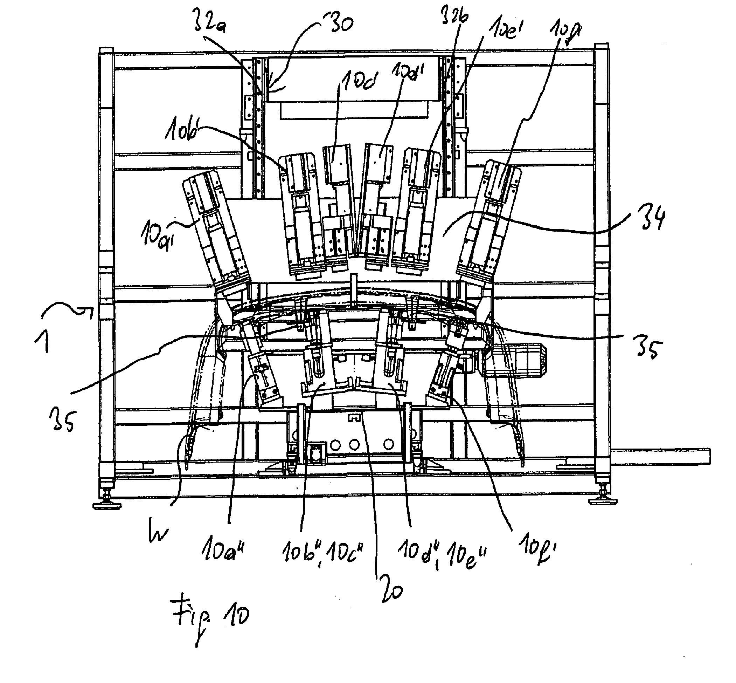

Die Verwendung der Entnahmeeinrichtung 30 für das Werkstück W bringt nun mit sich, dass die Oberwerkzeuge 10a'-10f der Bearbeitungswerkzeuge 10a-10f nun nicht mehr - wie im ersten Ausführungsbeispiel - im wesentlichen stationär in der Vorrichtung 1 angeordneten Trägerplatten 4a, 4b angebracht sind, sondern dass vorgesehen ist, dass - wie am besten aus den Figuren 9 und 10 ersichtlich - eine Trägerplatte 34 von einer Hubeinheit 31 der Entnahmeeinrichtung 30 verfahrbar ist. Diese weist Führungsschienen 32a, 32b auf, auf denen die Trägerplatte 34 schlittenartig verfahrbar ist.

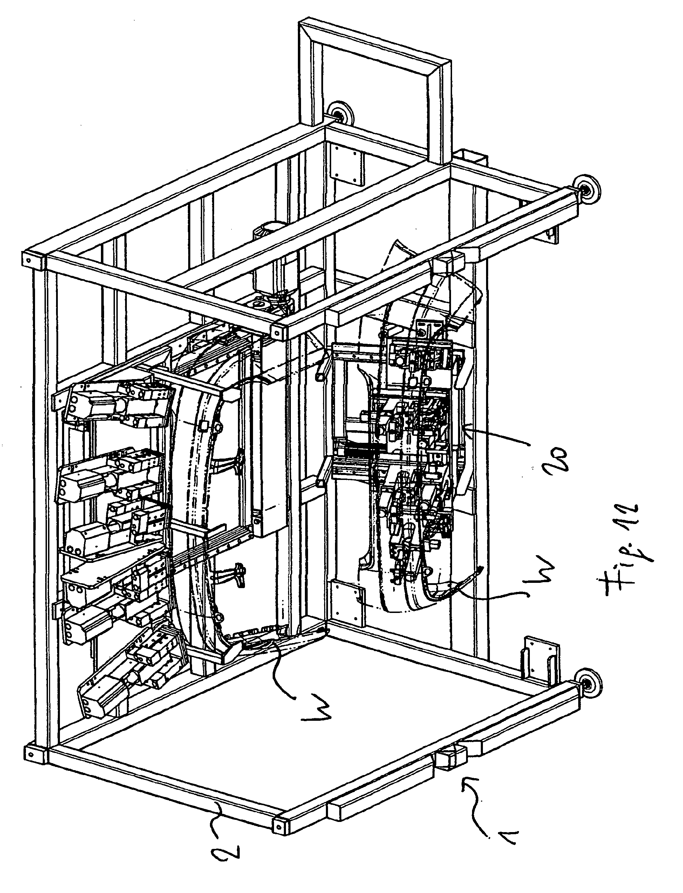

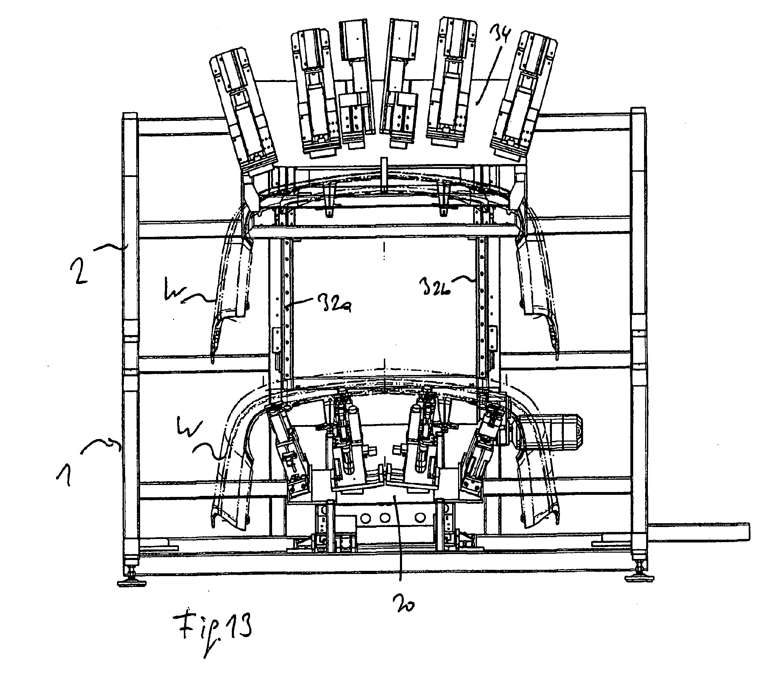

Die Figur 9 zeigt nun die Vorrichtung 1 samt dem Werkstück W nach der Beendigung des Bearbeitungsvorgangs, also nach dem durch einen Stanzprozess die Öffnungen in das Werkstück W eingebracht und die Einlegeteile E mit dem Werkstück W verschweißt wurden. Um nun das Werkstück W einfach aus der Vorrichtung 1 entnehmen zu können, werden Greifer 35 (siehe Figur 10) der Entnahmevorrichtung 30 ausgefahren und umfassen das Werkstück W. Dann wird mittels der Hubeinheit 31 der Entnahmeeinrichtung 30 - wie in den Figuren 12 und 13 dargestellt - die Trägerplatte 34 samt den auf ihr angeordneten Oberwerkzeugen 10a'-10f und das Werkstück W nach oben, also von den Unterwerkzeugen 10a"-10f" wegbewegt. Das Werkstück W kann dann von einer nicht gezeigten Handhabungseinrichtung aus der Entnahmeeinrichtung 30 entnommen werden.

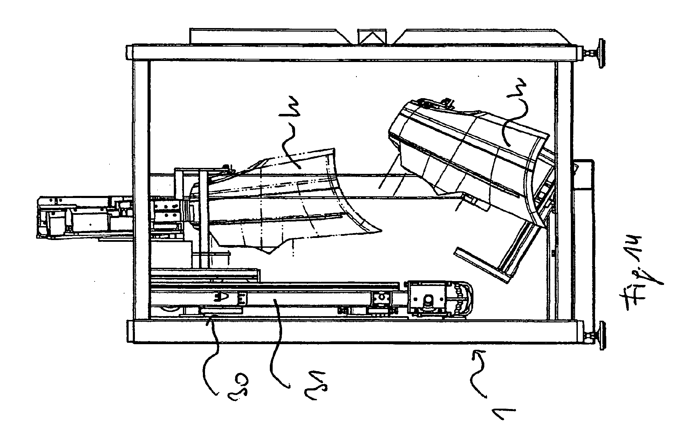

Gleichzeitig oder danach wird dann - wie in Figur 14 gezeigt - der Schwenktisch 20 in seine Ladestellung vorbewegt und das nächste Werkstück W kann in die Vorrichtung 1 eingebracht werden.

Bei der vorstehenden Beschreibung wird davon ausgegangen, dass die Oberwerkzeuge 10a'-10d' bzw. 10a'-10f' zum Stanzen und die Unterwerkzeuge 10a"-10d" bzw. 10a"-10f' zum Verbinden dienen. Natürlich kann dies auch umgekehrt sein, d. h., dass die Unterwerkzeuge 10a"-10d" bzw. 10a"-10f' zum Stanzen und die Oberwerkzeuge 10a'-10d' bzw. 10a'-10f zum Verbinden dienen.

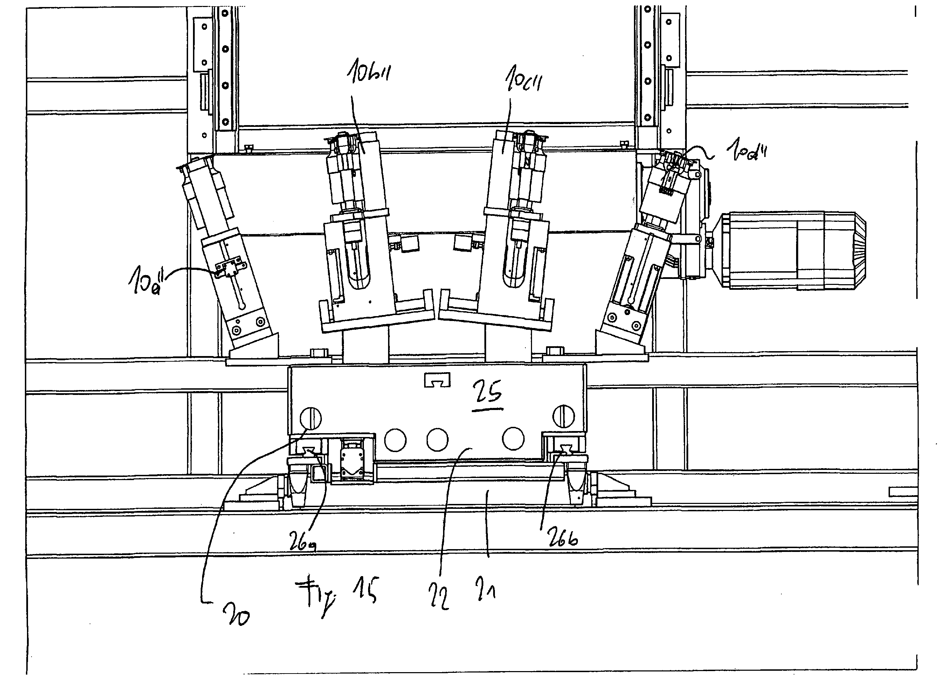

In der Figur 15 ist nun eine vergrößerte Darstellung des Schwenktisches 20 des ersten Ausführungsbeispiels dargestellt. Man erkennt wiederum die vier Unterwerkzeuge 10a"-10d". Um nun leichter eng benachbart liegende Teile des Werkstücks W zu bearbeiten können, ist vorgesehen, dass die Unterwerkzeuge 10a"-10f' auf einer Trägerplatte 25 angeordnet sind, welche in Schienen 26a, 26b geführt und daher verschiebbar im Schwenktisch 20 angeordnet ist, so dass die Unterwerkzeuge 10a"-10f' relativ zu den zugehörigen Oberwerkzeugen 10a'-10f mittels der beweglichen Trägerplatte 25 verschiebbar sind.

## Patentansprüche

1. Vorrichtung zum Bearbeiten, insbesondere zum Stanzen und Verbinden eines Werkstücks, insbesondere von Kunststoffteilen für ein Kraftfahrzeug, wobei die Vorrichtung (1) mindestens ein Bearbeitungswerkzeug (10a-10d; 10a-10f) mit einem Oberwerkzeug (10a'-10d'; 10a'-10f) und einem mit dem Oberwerkzeug (10a'-10d'; 10a'-10f') zusammenwirkenden Unterwerkzeug (10a"-10d"; 10a"-10f") aufweist, wobei das oder die Oberwerkzeuge (10a'-10d'; 10a'-10f) in der Vorrichtung (1) angeordnet sind, **dadurch gekennzeichnet, dass** das oder diese Unterwerkzeuge (10a"-10d"; 10a"-10"ff) auf einem Schwenktisch (20) der Vorrichtung (1) angeordnet sind, der von einer Beladestellung, in welcher der Schwenktisch (20) von dem oder den Oberwerkzeugen (10a'-10d'; 10a"-10f") entfernt ist, in eine Arbeitsstellung in der das oder die Unterwerkzeuge (10a"-10d"; 10a"-10f") mit dem der den zusammenwirkenden Oberwerkzeugen (10a'-10d'; 10a"-10f") ausgerichtet sind, schwenkbar ist, so dass durch eine Schwenkbewegung des Schwenktisches (20) das in der Beladestellung des Schwenktisches (20) in die Vorrichtung (1) eingebrachte Werkstück (W) sowie das oder die Unterwerkzeuge (10a"-10d"; 10a"-10f") unter das oder die Oberwerkzeuge (10a'-10d', 10a'-10f) bringbar ist.

2. Vorrichtung nach Anspruch 1, **dadurch gekennzeichnet, dass** das oder die Oberwerkzeuge (10a'-10d') auf mindestens einer stationär in der Vorrichtung (1) angeordnete Trägerplatte (4a, 4b) angeordnet sind.

3. Vorrichtung nach Anspruch 1, **dadurch gekennzeichnet, dass** das oder die Oberwerkzeuge (10a'-10f') der Bearbeitungswerkzeuge (10a-10f) der Vorrichtung (1) von dem oder den Unterwerkzeugen (10a"-10f") wegbewegbar angeordnet sind.

4. Vorrichtung nach Anspruch 3, **dadurch gekennzeichnet, dass** das oder die Oberwerkzeuge (10a'-10f') auf einer Trägerplatte (34) angeordnet sind, welche von einer Hubeinrichtung (31) bewegbar ist.

5. Vorrichtung nach Anspruch 1, **dadurch gekennzeichnet, dass** die Vorrichtung (1) eine Entnahmeeinrichtung (30) aufweist, durch welche das auf dem Schwenktisch (20) angeordnete Werkstück (W) in der Arbeitsstellung der Vorrichtung (1) erfassbar und von dem oder den Unterwerkzeugen (10a"-10f") wegbewegbar ist.

6. Vorrichtung nach Anspruch 1, **dadurch gekennzeichnet, dass** das oder die Unterwerkzeuge (10a'-10d'; 10a"-10f") in zumindest einer Richtung verschiebbar angeordnet sind.

7. Vorrichtung nach Anspruch 1, **dadurch gekennzeichnet, dass** mindestens ein Oberwerkzeug (10a'-10d'; 10a'-10f') ein Stanzwerkzeug aufweist.

8. Vorrichtung nach Anspruch 1, **dadurch gekennzeichnet, dass** mindestens ein Unterwerkzeug (10a"-10d"; 10a"-10f") ein Verbindungswerkzeug aufweist.

9. Vorrichtung nach einem der vorangehenden Ansprüche, **dadurch gekennzeichnet, dass** das oder mindestens eines der Bearbeitungswerkzeuge (10a) ein Unterwerkzeug (10a") mit mindestens zwei Bearbeitungseinheiten (14a, 14b) aufweist, die zum Oberwerkzeug (10a') hin- und von diesem wegbewegbar sind, und dass das Unterwerkzeug (10a") eine Bewegungseinheit (16) aufweist, durch welche mindestens die erste Bearbeitungseinheit (14a) und die zweite Bearbeitungseinheit (14b) wahlweise unter dem Oberwerkzeug (10a') des Bearbeitungswerkzeugs (10a) positionierbar sind.

10. Vorrichtung nach Anspruch 9, **dadurch gekennzeichnet, dass** das Oberwerkzeug (10a') einen Stanzkopf (11) und einen Stanzstempel (12) besitzt, und dass mindestens eine der Bearbeitungseinheiten (14a) eine Matrize (16) aufweist, welche mit dem Stanzstempel (12) des Oberwerkzeugs (10a) zusammenwirkt, dass mindestens eine Bearbeitungseinheit (15b) des Unterwerkzeugs (10a") als eine Verbindungseinheit ausgeführt ist.

11. Vorrichtung nach Anspruch 9 **dadurch gekennzeichnet, dass** die Bewegungseinheit einen Schlitten (15) aufweist, auf dessen Schlittentisch (15a) die Bearbeitungseinheiten (14a, 14b) angeordnet sind, und dass der Schlittentisch (15a) des Schlittens (15) auf einer Schlittenführung (15b) verschiebbar angeordnet ist.

12. Vorrichtung nach einem der vorangehenden Ansprüche, **dadurch gekennzeichnet, dass** mindestens eine Bearbeitungseinheit (14b) eine Sonotrode (17) aufweist, die von einer Hubeinrichtung (17c) zum Oberwerkzeug (10a') hinbewegbar ist.

13. Vorrichtung nach einem der vorangehenden Ansprüche, **dadurch gekennzeichnet, dass** die erste Bearbeitungseinheit (14a) einen Abstreifer oder Niederhalter (13) aufweist, durch den das Werkstück (W) lagefixierbar ist.

## Claims

1. Apparatus for working, particularly for punching and connecting a work piece, particularly of plastic parts of a vehicle, wherein the apparatus (1) comprises at least one working tool (10a-10d; 10a-10f) having an upper tool (10a'- 10d'; 10a' -10f) and a lower tool co-operating with the upper tool, the upper tool or a plurality of upper tools (10a'-10d'; 10a'-10f) being arranged in the apparatus (1), **characterized in that** the lower tool or a plurality of lower tools (10a"-10d"; 10a"-10"f) are arranged on a turntable (20) of the apparatus (1), which is pivotable from a loading position, in which the turntable (20) is remote from the upper tool or plurality of upper tools (10a'- 10d'; 10a'-10f'), to a working position, in which the lower tool or the plurality of lower tools (10a' -10d'; 10a'-10f') are aligned with the co-operating upper tool or plurality of upper tools, so that by a pivoting movement of the turntable (20) the work piece (W), inserted into the apparatus (1) in the loading position of the turntable (20), as well as the lower tool or the plurality of lower tools (10a" - 10d"; 10a" - 10f") can be brought under the upper tool or the plurality of upper tools (10a' - 10d'; 10a'-10f').

2. Apparatus according to claim 1, **characterized in that** the upper tool or the plurality of upper tools (10a' - 10d') is or are disposed on at least one carrier plate (4a, 4b) being stationarily arranged in the apparatus (1).

3. Apparatus according to claim 1, **characterized in that** the upper tool or the plurality of upper tools (10a' - 10f') of the working tools (10a-10f) of the apparatus (1) is or are arranged so that it or they can be moved away from the lower tool or the plurality of lower tools (10a"-10f").

4. Apparatus according to claim 3, **characterized in that** the upper tool or the plurality of upper tools (10a'-10f') is or are arranged on a carrier plate (34) which is movable by a lifting device (31).

5. Apparatus according to claim 1, **characterized in that** the apparatus (1) comprises a handling device (30) by which the work piece (W) arranged on the turning table (20) can be engaged in the working position of the apparatus (1) and can be moved away from the lower tool or the plurality of lower tools (10a" -10f').

6. Apparatus according to claim 1, **characterized in that** the lower tools (10a'-10d'; 10a" - 10f") are shiftably arranged in at least one direction.

7. Apparatus according to claim 1, **characterized in that** at least one upper tool (10a'-10d'; 10a'-10f') comprises a punching tool.

8. Apparatus according to claim 1, **characterized in that** at least one lower tool (10a"-10d"; 10a"-10f") comprises a connection tool.

9. Apparatus according to one of the previous claims, **characterized in that** one working tool (10a) comprises a lower tool (10a") with at least two working units (14a, 14b) movable to and away from the upper tool (10a'), and that the lower tool (10a") comprises at least one moving device (16) by which at least the first working unit (14a) and the second working unit (14b) are optionally movable relatively to the upper tool (10a') of the working tool (10a).

10. Apparatus according to claim 9, **characterized in that** the upper tool (10a') of the apparatus (1) comprises a punching head (11) and a punching die (12), and that at least one of the working units (14a) comprises a die (16), which co-operates with the punching die (12) of the upper tool (10a), and at least one working unit (14b) of the lower tool (10a") is formed as a connecting unit.

11. Apparatus according to claim 9, **characterized in that** the moving device comprises a carriage (15) comprising a carriage table (15a) upon which the working units (14a, 14b) are arranged, and that the carriage table (15a) of the carriage (15) is shiftably arranged on a carriage guide (15b).

12. Apparatus according to one of the previous claims, wherein at least one working unit (14b) comprises a sonotrode (17), which can be moved by a lifting device (17c) towards the upper tool (10A').

13. Apparatus according to the previous claims, **characterized in that** the first working unit (14a) comprises a wiper or holder (13), so that the work piece (W) can be held in position.

## Revendications

1. Dispositif servant à traiter, en particulier à estamper et assembler une pièce à usiner, en particulier des parties en matière plastique pour un véhicule automobile, sachant que le dispositif (1) présente au moins un outil de traitement (10a-10d; 10a-10f) doté d'un outil supérieur (10a'-10d' ; 10a'-10f') et d'un outil inférieur (10a"-10d" ; 10a"-10f") coopérant avec l'outil supérieur (10a'-10d' ; 10a'-10f'), sachant que le ou les outils supérieurs (10a'-10d'; 10a'-10f') sont disposés dans le dispositif (1), **caractérisé en ce que** l'outil inférieur/les outils inférieurs (10a"-10d" ; 10a"-10f") sont disposés sur une table pivotante (20) du dispositif (1), laquelle peut être pivotée d'une position de chargement, dans laquelle la table pivotante (20) est espacée de l'outil ou des outils supérieurs (10a'-10d'; 10a"-10f"), dans une position de travail, dans laquelle l'outil/les outils inférieurs (10a"-10d" ; 10a"-10f") sont orientés avec les outils supérieurs (10a'-10d' ; 10a"-10f") coopérant, de sorte qu'un mouvement de pivotement de la table pivotante (20) permet d'amener la pièce à usiner (W) introduite dans le dispositif (1) lorsque la table pivotante (20) se trouve en position de chargement ou l'outil ou les outils inférieurs (10a"-10d" ; 10a"-10f") sous l'outil ou les outils supérieurs (10a'-10d'; 10a'-10f').

2. Dispositif selon la revendication 1, **caractérisé en ce que** l'outil ou les outils supérieurs (10a'-10d') sont disposés sur au moins une plaque de support (4a, 4b) disposée de manière stationnaire dans le dispositif (1).

3. Dispositif selon la revendication 1, **caractérisé en ce que** l'outil ou les outils supérieurs (10a'-10f') des outils de traitement (10a-10f) du dispositif (1) sont disposés de manière à pouvoir s'éloigner de l'outil ou des outils inférieurs (10a"-10f").

4. Dispositif selon la revendication 3, **caractérisé en ce que** l'outil ou les outils supérieurs (10a'-10f') sont disposés sur une plaque de support (34), laquelle peut être déplacée par un système de levage (31).

5. Dispositif selon la revendication 1, **caractérisé en ce que** le dispositif (1) présente un système de retrait (30), lequel permet de saisir, lorsque le dispositif (1) se trouve dans la position de travail, la pièce à usiner (W) disposée sur la table pivotante (20) et d'éloigner cette dernière de l'outil ou des outils inférieurs (10a"-10f").

6. Dispositif selon la revendication 1, **caractérisé en ce que** l'outil ou les outils inférieurs (10a'-10d'; 10a''-10f") sont disposés de manière à pouvoir être coulissés dans au moins une direction.

7. Dispositif selon la revendication 1, **caractérisé en ce que** l'outil supérieur (10a'-10d'; 10a'-10f') au moins au nombre de un présente un outil d'estampage.

8. Dispositif selon la revendication 1, **caractérisé en ce que** l'outil inférieur (10a"-10d" ; 10a''-10f") au moins au nombre de un présente un outil d'assemblage.

9. Dispositif selon l'une quelconque des revendications précédentes, **caractérisé en ce que** l'outil de traitement ou au moins un des outils de traitement (10a) présente un outil inférieur (10a") doté au moins de deux unités de traitement (14a, 14b), lesquelles sont rapprochées ou éloignées de l'outil supérieur (10a'), et **en ce que** l'outil inférieur (10a") présente une unité de déplacement (16), laquelle permet de positionner au moins la première unité de traitement (14a) et la deuxième unité de traitement (14b) au choix sous l'outil supérieur (10a') de l'outil de traitement (10a).

10. Dispositif selon la revendication 9, **caractérisé en ce que** l'outil supérieur (10a') comprend une tête d'estampage (11) et un poinçon d'estampage (12), et **en ce qu'**au moins une des unités de traitement (14a) présente une matrice (16), qui coopère avec le poinçon d'estampage (12) de l'outil supérieur (10a), **en ce qu'**au moins une unité de traitement (15b) de l'outil inférieur (10a") est réalisée comme une unité d'assemblage.

11. Dispositif selon la revendication 9, **caractérisé en ce que** l'unité de déplacement présente un chariot (15), sur la table (15a) duquel sont disposées les unités de traitement (14a, 14b), et **en ce que** la table de chariot (15a) du chariot (15) est disposée de manière à pouvoir coulisser sur une glissière de chariot (15b).

12. Dispositif selon l'une quelconque des revendications précédentes, **caractérisé en ce qu'**au moins une unité de traitement (14b) présente une sonotrode (17), qui peut être déplacée par un système de levage (17c) en direction de l'outil supérieur (10a') de manière à s'en rapprocher.

13. Dispositif selon l'une quelconque des revendications précédentes, **caractérisé en ce que** la première unité de traitement (14a) présente un racleur ou un serre-flan (13), lequel permet de fixer en position la pièce à usiner (W).
